# EUROPEAN PATENT APPLICATION

(11) **EP 1 734 694 A1**
(43) Date of publication of application: **20.12.2006**
(21) Application number: 06300560.7
(22) Date of filing: 07.06.2006
(51) Int. Cl.: H04L 12/26, H04L 29/14

(54) **Redundancy group status management apparatus and methods**

(30) Priority: 14.06.2005 US 152478
(71) Applicant: Alcatel, 75008 Paris (FR)
(72) Inventor: Gopinadhan, Bijunath, Nepean Ontario K2B 7T4 (CA); Tan, Lay Been, Kanata Ontario K2K 2R7 (CA); Martineau, Terrence, Ottawa Ontario K1N 8N9 (CA)
(74) Representative: Hervouet, Sylvie

(57) **Abstract**

Redundancy group status management apparatus and methods are disclosed. Operational status of a standby communication system communication component of a redundancy group is determined by an active component of the redundancy group. The active component transmits operational status information indicating the operational status of the standby component, or an operational status of the redundancy group in some embodiments, to a remote system such as a Network Management System (NMS). The remote system determines and provides an indication of overall operational status of the redundancy group. A single icon may be used to represent both the redundancy group and the operational status of the redundancy group in a system map or other visual representation of the communication system.

## Description

### Field of the Invention

This invention relates generally to communications and, in particular, to managing operating status of redundant communication system components.

### Background

Operational status information associated with components of a communication system is typically managed through a control console such as a Network Management System (NMS) which displays representations of communication system components in a system map. However, since space on a system map display of an NMS is limited, any information about managed components or objects needs to be displayed in a space-efficient, compact manner.

In one NMS, a pair of redundant components, only one of which is active at any time, was displayed as one icon. The colour of the icon depicted the status of only the active component. Hence, the status of the standby component was not displayed. This is problematic in that if the standby component is not in the correct state, then the redundant capability of the pair is non-operational, i.e., the active component is effectively running in an unprotected mode. In this case, if the active component fails, there would be no backup component, which is a serious failure condition. Using currently available NMS technologies, an operator of a communication system is not informed when such risks are present and thus is unaware that corrective actions can or should be taken.

Another available NMS introduced new icons which provided operators with more information about the state of a network when viewing a map. These new icons included a first area affected by highlighting- and partitioning-related functions, and a second area, remaining unaffected by these functions, for displaying the status of one or more objects associated with the icon. The second area was further subdivided into several regions, where each region was for displaying the status of the associated objects by object type. The object types included link, child, descendant, etc. which were indicated by a unique graphic indicating the type.

Although these new icons provided additional state information, they do not provide an indication of overall group operational status for a group of redundant components or operational status for standby components, and thus an operator might not be aware of a potential serious failure condition.

Currently available NMS solutions also rely on the NMS to determine operational status and activity state of managed components. This can lead to incorrect indications of operational status and activity, with the NMS thereby losing "synchronization" with the system and components it manages. Other equipment in a communication system may be able to more accurately assess the operational status and activity state of components in a redundancy group.

Therefore, there remains a need for improved operational status determination and management techniques.

### Summary of the Invention

Embodiments of the invention provide techniques for displaying information about managed communication system components in a system map in a space-efficient, compact manner.

According to one embodiment, the invention addresses the problem of efficiently displaying the operational status of a pair of managed redundant components on a NMS system map. The managed components may, for example, be a pair of redundant component management systems which manage other components of a communication system.

In one particular implementation, a communication link is provided between a pair of redundant components for communicating their individual statuses to each other. An active component then communicates status information to an NMS. At the NMS, a single system map icon is used, in a system map, list, or tree representation for instance, to represent the pair of redundant components, and includes an indication of an overall operational status of the pair. Overall operational status may be determined by the NMS or by an active component from individual statuses of redundant components.

According to an aspect of the invention, there is provided a communication system component configurable as an active component of a redundancy group of communication system components. The component includes one or more interfaces for communicating information with a standby component of the redundancy group and with a remote system, and a component operational status module operatively coupled to the interfaces. The component operational status module is configured to monitor for information from the standby component of the redundancy group, to determine an operational status of the standby component based on a result of the monitoring, and to transmit to the remote system operational status information indicating the operational status of the standby component.

The component operational status module may be configured to transmit to the standby component, through an interface of the one or more interfaces, information for causing the standby component to transmit response information to the communication system component. The communication system component may then determine an operational status of the standby component based on the response information, such as by determining whether a response to the transmitted information is received within a response time period.

The communication system component may also be configurable as a standby component of the redundancy group. In this case, the component operational status module is configured in a standby mode to receive information from an active component of the redundancy group and to transmit to the active component a response to the received information.

In one embodiment, the component includes a component management system for managing other components of a communication system.

The component management system may transmit to the standby component operational status information for the other components. The operational status information causes the standby component to transmit response information to the communication system component, and accordingly an operational status of the standby component may be determined based on the response information.

A group operational status module may also be implemented in the component and operatively coupled to the component operational status module. The group operational status module determines an operational status of the redundancy group, such as online status and unprotected status, based on the operational status of the standby component. The operational status information to be transmitted to the remote system preferably indicates the operational status of the redundancy group.

A communication system may include one or more redundancy groups having communication system components as described briefly above. Each communication system component of a redundancy group is preferably operatively coupled to other components of the redundancy group. An NMS of the communication system may be operatively coupled to the communication system components for managing the components. The component operational status module of an active communication system component of a redundancy group then transmits the operational status information to the NMS.

At the NMS, there may be provided an interface to a communication link with the active communication system component, a display, and a group operational status module operatively coupled to the interface and to the display. The group operational status module is configured to receive the operational status information from the active component, to determine an operational status of the redundancy group based on the received operational status information, and to display on the display an icon representing the redundancy group and an operational status of the redundancy group.

In accordance with another aspect of the invention, a communication system component configurable as a standby component of a redundancy group of communication system components is provided. The component includes a component management system for managing other communication system components, an interface to a communication link, and a component operational status module operatively coupled to the interface and configured to transmit to an active component of the redundancy group through the interface operational status information indicating an operational status of the standby component.

An apparatus for indicating operational status of a redundancy group is also provided, and includes an output device and an operational status module operatively coupled to the output device. The operational status module is configured to determine an operational status of the redundancy group, and to provide through the output device an indication of the redundancy group and the operational status of the redundancy group.

In one embodiment, the output device is a display, and the indication is provided as an icon. The icon includes an indication that the icon represents a redundancy group, and one or more further indications of the operational status of the redundancy group.

The apparatus may also include an interface for receiving from an active component of the redundancy group operational status information indicating at least one of an operational status of the redundancy group and a respective operational status of one or more communication system components of the redundancy group. The operational status module is preferably operatively coupled to the interface and configured to determine the operational status of the redundancy group based on the operational status information received from the active component.

The operational status of the redundancy group may be selected from online status, off-line status, reconcile in progress status, and unprotected status.

In some embodiments, the operational status module determines, and provides an indication of, a cause associated with the operational status of the redundancy group.

The apparatus may also receive from the active component cause information where the operational status information indicates that any of the communication system components is not operational, and include an activity control module for controlling which communication system component of the redundancy group is active. The activity control module may be configured to initiate, based on the cause information, one or more recovery operations by an active communication system component which the operational status information previously indicated was not operational.

In one embodiment, the apparatus is provided at an NMS which is operatively coupled to the components of the redundancy group.

A method of managing communication system component redundancy group operational status is also provided, and includes communicating information within a redundancy group, the redundancy group comprising an active communication system component and one or more standby communication components, determining a component operational status of at least each standby communication system component of the redundancy group based on the information, determining an operational status of the redundancy group based on the component operational status of at least each standby communication system component of the redundancy group, and providing an indication of the operational status of the redundancy group.

The operation of providing may include displaying on a display an icon representing the redundancy group. The icon preferably includes the indication of the operational status of the redundancy group.

According to yet another aspect of the invention, a data structure stored on a machine-readable medium includes an identifier of a redundancy group, the redundancy group comprising a plurality of communication system components, and a status indicator indicating an operational status of the redundancy group.

The identifier may include an address of a currently active component and respective addresses of one or more standby components of the redundancy group.

The data structure may also include a cause indicator indicating a cause associated with the operational status of the redundancy group.

Another aspect of the invention provides a graphical user interface (GUI) for a management system configured to manage components of a communication system, the GUI comprising an icon representing a redundancy group which includes a plurality of the components of the communication system, the icon further comprising an indication of an operational status of the redundancy group.

Other aspects and features of the present invention will become apparent to those ordinarily skilled in the art upon review of the following description of specific illustrative embodiments thereof.

### Brief Description of the Drawings

Examples of embodiments of the invention will now be described in greater detail with reference to the accompanying drawings, in which:
Fig. 1 is a block diagram of a communication system;
Fig. 2 is a block diagram of an arrangement of communication system components;
Fig. 3 is a block diagram of an example communication system component;
Fig. 4 is a block diagram of an NMS implementing an embodiment of the invention;
Fig. 5 is a block diagram of an icon according to an embodiment of the invention;
Fig. 6 is a block diagram of a data structure in accordance with an embodiment of the invention; and
Fig. 7 is a flow diagram of a method of an embodiment of the invention.

### Detailed Description of Preferred Embodiments

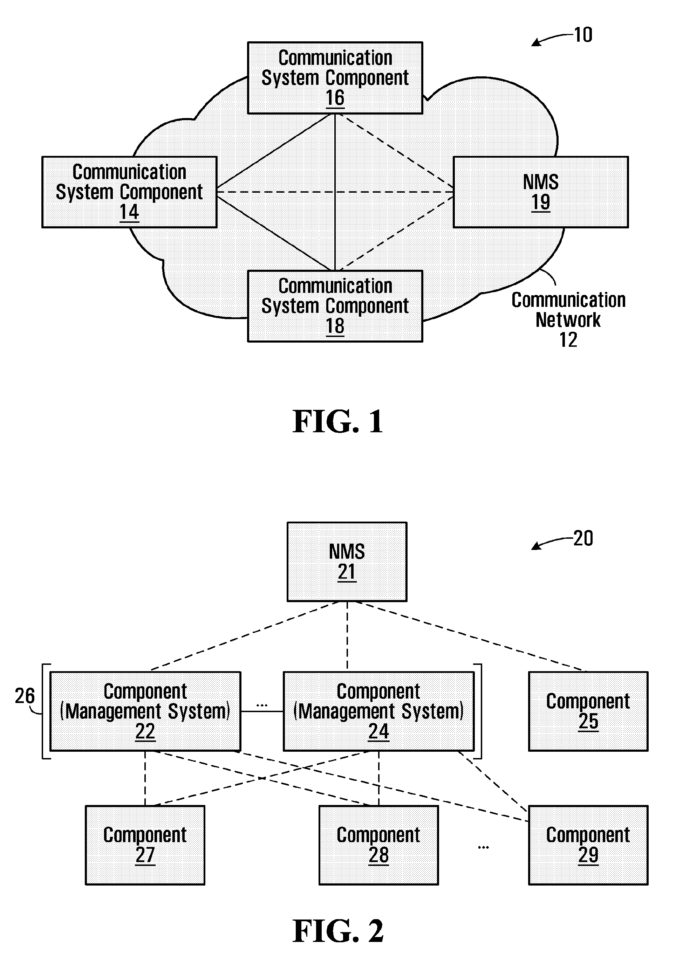

Fig. 1 is a block diagram of a communication system 10. The communication system 10 includes a communication network 12, components 14, 16, 18, and an NMS 19. Although a communication system may include multiple communication networks, each having respective components and possibly an NMS, only one communication network 12 has been shown in Fig. 1 to avoid congestion. A communication network may also have more or fewer than the three example components 14, 16, 18. In addition, other equipment may be provided within a communication network or operate in conjunction with a communication network, such as end user equipment and other user, management, or control equipment. It should therefore be appreciated that the communication system 10 of Fig. 1, as well as the contents of the other drawings, are intended solely for illustrative purposes, and that the present invention is in no way limited to the particular example embodiments explicitly shown in the drawings and described herein.

The communication network 12 represents a collection of equipment through which communications may be established. Equipment in the communication network may be operatively coupled through virtually any type of connection over which communication signals can be exchanged. Connections may include wired connections, wireless connections, or some combination thereof. Communications over these connections may be established, for example, for telephone calls and data communication sessions.

The particular types of connections and communication signal exchange available in the communication network 12 is at least to some extent dependent upon the type of the equipment used to implement the network, the protocols used in the network, the services offered by service providers using the network, the type of end user equipment for which the connections are established, for instance, and/or possibly other factors.

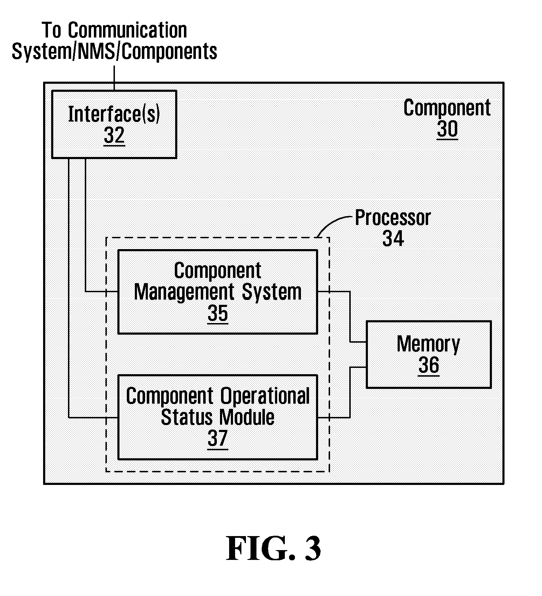

The communication system components 14, 16, 18, may be switches, routers, or other types of communication equipment. In another embodiment, the components 14, 16, 18 include control or management systems through which other components, illustratively communication equipment, is controlled. Examples of communication system components 14, 16, 18 are described in further detail below with reference to Figs. 2 and 3.

Although shown in Fig. 1 as single blocks, failure protection for each communication system component 14, 16, 18, may be provided by a substantially identical redundant component. In such so-called redundancy protection systems, one of the multiple components in a redundancy group is active at any time, and other components in the group are in a standby mode. Both active and standby components normally support the same functions, or at least a set of common protected functions, but only the active component is actually performing these functions at any time. In the event of a failure of an active component, activity is switched to a standby component of the group.

Redundancy protection may similarly be provided for the NMS 19. Information transfer and operational status display aspects of the invention, for example, could be implemented for redundant NMSs.

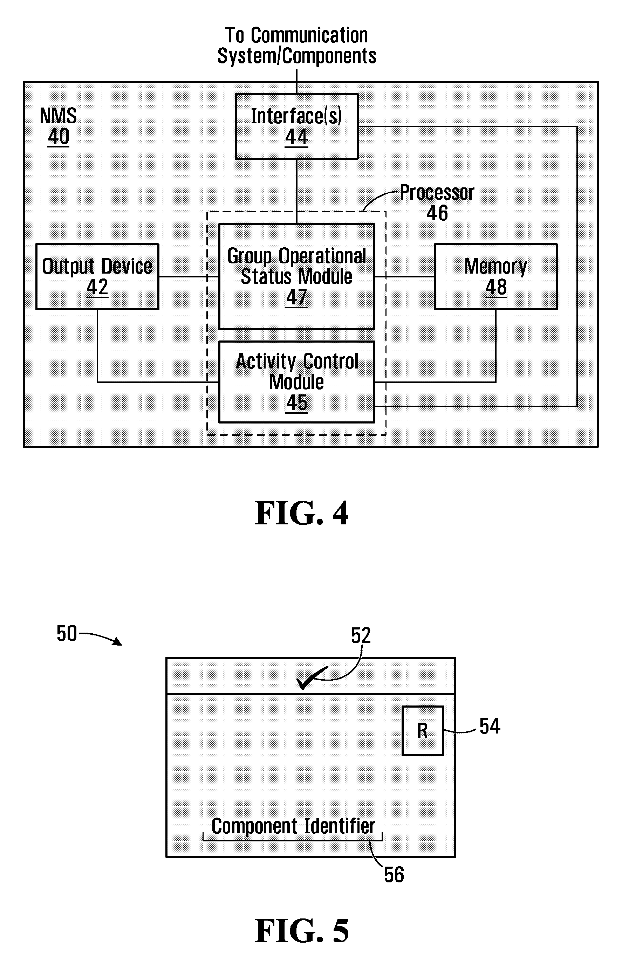

Control and management functions, which may include connection setup, management, and release, failure protection, and network monitoring, for example, are provided by the NMS 19. The NMS 19 is operatively coupled to the components 14, 16, 18 and exchanges at least control information with these components. Control paths between the NMS 19 and the components 14, 16, 18 may share the same network connections as data paths between the components 14, 16, 18, although separate, dedicated control connections may be provided in some embodiments. An illustrative example of an NMS 19 is shown in Fig. 4 and described below.

The nature and extent of interactions between the NMS 19 and the components 14, 16, 18, may vary for different types of communication network and components. For example, in an Asynchronous Transfer Mode (ATM) network, a component 14, 16, 18 through which communications are established may be responsive to control signalling from the NMS 19 to establish Switched Permanent Virtual Connections (SPVCs). SPVCs are established using ATM signalling and routing, typically the Private Network-to-Network Interface (PNNI) protocol, from a source node to a destination node. In this case, the NMS 19 may configure a source on one component 14, 16, 18 and optionally a destination on another one of the components, and PNNI is used to establish communications between the source and destination.

An SPVC, with which those skilled in the art will be familiar, represents an illustrative example of a type of network connection which is configured through interaction between an NMS and components managed by the NMS. It should be appreciated that the present invention is in no way limited to SPVCs, or to particular NMS functions associated with communication management and control. As noted above, the components 14, 16, 18 need not be components which actually transfer communication signals and may instead be management systems for managing other components. These types of component may interact with the NMS 19 in a somewhat different manner.

According to one embodiment of the invention, management of the communication network 12 is implemented using a network manager software application at the NMS 19 and one or more lower-level component management systems. In this type of implementation, the network manager may directly manage some communication system components, whereas other components are managed through component management systems. Any or all of the components 14, 16, 18 may include a component management system for managing other components (not shown) of the communication system 10.

Fig. 2 is a block diagram illustrating an arrangement of communication system components. In Fig. 2, the arrangement 20 includes an NMS 21, components 22, 24 with management systems, and components 25, 27, 28, 29. Whereas Fig. 1 explicitly shows only components 14, 16, 18 which are directly managed by the NMS 19, Fig. 2 shows components which are directly and indirectly managed by the NMS 21. The components 22, 24, 25 are directly managed by the NMS 21. The components 22, 24 themselves include component management systems through which the components 27, 28, 29 are indirectly managed by the NMS 21. Thus, as illustrated in Fig. 2, a managed communication system component may itself manage other communication system components, as in the case of the managing components 22, 24.

The arrangement 20 also illustrates a redundancy group 26 which includes the managing components 22, 24, and possibly other redundant components. The managing components 22, 24 are operatively coupled to the managed components 27, 28, 29, although only one of the managing components 22, 24 is active at any time. Activity is switched between the managing components 22, 24 when the currently active component fails.

It should be appreciated that although only one redundancy group is explicitly shown at 26 in Fig. 2, embodiments of the invention may be implemented in conjunction with other arrangements of redundant and non-redundant components. For example, redundancy protection may be provided for the NMS 21, in which case the redundancy group 26 is managed by redundant NMSs. Redundant components may thus be managed by other redundant components. A component which manages some redundant components may also manage non-redundant components. The NMS 21, for example, manages both the redundancy group 26 and the non-redundant component 25.

A communication system may therefore include any combination of redundant and non-redundant components. A redundant component may manage redundant components, non-redundant components, or both. A non-redundant component may similarly manage redundant components, non-redundant components, or both.

In some embodiments, selection of a component as the active component of a redundancy group is controlled by the NMS 21. The NMS 21 may determine that an activity switch is to be performed when communication with a currently active managing component 22, 24 is interrupted, for example. As described briefly above, the components of a redundancy group may be substantially identical and support the same functions. Thus, the managing components 22, 24 may be identical components which are configurable as either active or standby components. Functions supported by each managing component 22, 24 are enabled or disabled based on its activity state. The NMS 21 may designate or configure a managing component 22, 24 as the active component in the redundancy group 26 through control signalling for instance. The present invention, however, is not limited to any particular technique for controlling activity of components in a redundancy group.

Various factors may be used to determine which component of a redundancy group is active. An active component may remain active until failure of the component is detected, for example. According to another embodiment, a preferred active component is pre-configured by a user and is to be made active by the NMS 21 when the NMS 21 determines that all components are operative. In this case, if activity is switched from the preferred active component to a standby component, activity would subsequently be switched back to the preferred active component when the preferred active component recovers from a failure for instance.

The failure protection provided by components of a redundancy group is effective only as long as a standby component remains operational. Where a redundancy group includes a pair of components, the active component is protected only while the standby component is operational and thus available to assume protected functions in the event of a failure of the active component. If the standby component is not operational, then the active component is operating in an unprotected state.

Some form of monitoring of the current state of a communication system is typically supported by an NMS or other management or control system. A system map displayed in a Graphical User Interface (GUI) at the NMS 21, for example, might include representations of the components 25, 27, 28, 29 and an active one of the managing components 22, 24.

According to an aspect of the invention, the need to provide an indication of the operational status of both active and standby components of a redundancy group is addressed. In the arrangement 20, an embodiment of the invention allows the managing components 22, 24 and an operational status of the redundancy group 26 to be represented using one icon in a system map, list, tree, or other visual output displayed at the NMS 21.

Operational status determination is facilitated by operatively coupling the components in a redundancy group, as illustrated by the connection between the managing components 22, 24 of the redundancy group 26. The type of connection between components in a redundancy group may be dependent upon such factors as the type of the redundant components, the type of equipment in which the components are implemented, and the physical proximity of the redundant components. Redundant cards in an equipment rack, for example, may be connected through backplane conductors. Other types of wired or wireless connection may be provided between redundant components.

Active and standby components of a redundancy group are thereby enabled to communicate information to be used as a basis for determining operational status. When the managing component 22 is active, for instance, it may transmit a status query to the standby managing component 24, which responds with an indication of its operational status. Although state information for managed components 27, 28, 29 may be communicated between conventional managing in the form of state database information, it should be appreciated that managing components do not normally exchange operational status information which indicates their own statuses. In other words, an active managing component may advise a standby managing component of the states of managed components, but the active and standby managing components typically do not advise each other of their own operational statuses. An embodiment of the invention effectively adds a communication between redundant managing components for exchange of operational status information or, as disclosed herein, other information which can be used to determine redundant managing component operational status.

Operational status may also or instead be inferred from information which is communicated between redundant components. An information transfer mechanism according to which a receiving component acknowledges receipt of information allows a redundant component to determine the operational status of another component in a redundancy group based on whether an acknowledgement response is received within a response time period. The absence of any response within the response time period is indicative of a failure of either a component or an inter-component communication link.

In one embodiment, each component is configurable as an active component of a redundancy group to communicate information with a standby component and to determine an operational state of the standby component based on the information. The communicated information may include information which is transmitted to the standby component, information which is received from the standby component, or both, in the case of a query and response or a transmission and acknowledgement for instance. Each component may also be configured as a standby component which communicates information to an active component for use by the active component in determining an operational state of the standby component.

An active managing component 22, 24 of the redundancy group 26 may also provide status information to the NMS 21. This enables the NMS 21 to learn the status of a standby component via the active component.

The structure and function of a redundant component are described in further detail below by way of illustrative example with reference to Fig. 3. The component 30 of Fig. 3 includes one or more interfaces 32, a memory 36, and a processor 34 operatively coupled to the interface(s) 32 and to the memory 36. In the component 30, a component management system 35 and a component operational status module 37 are implemented using the processor 34.

A communication system component may include further or possibly fewer elements than those explicitly shown in Fig. 3. A managed component which does not itself manage other components, for example, might not include a component management system 35. A component which is directly involved in communication signal transfer would generally support additional communication signal processing functions not shown in Fig. 3.

The interface(s) 32 may include one or more interfaces through which the component 30 transmits and/or receives information. The particular structure of the interface(s) 32 may be dependent upon the information transfer mechanisms to be supported and the type of communication medium over which information is to be transferred. A single interface may support all communications, or multiple interfaces may be provided for different types of communication.

In some embodiments, data and control paths are implemented using separate interfaces. Respective interfaces may also or instead be provided to support communication with other components of a redundancy group, communication with an NMS, and communication through a communication network for instance. Thus, it should be appreciated that a component may include one or more interfaces 32 to support communication functions. Those skilled in the art will be familiar with many different types of interface, and other types of interface which are subsequently developed may also be suitable for implementation as an interface 32 in the component 30.

The processor 34 represents one possible implementation of the functions disclosed herein. Microprocessors, microcontrollers, Application Specific Integrated Circuits (ASICs), Digital Signal Processors (DSPs), Programmable Logic Devices (PLDs), and Field Programmable Gate Arrays (FPGAs) all represent examples of configurable or programmable hardware elements which could be used as the processor 34. The processor 34 may be a dedicated processor which performs only operational status-related functions, or a shared processor which also executes other software and performs additional functions.

Although the component management system 35 and the component operational status module 37 are shown in Fig. 3 inside the processor 34, it should be appreciated that these functional elements, and possibly others, could be implemented in software which is stored in the memory 36 and executed by the processor 34. The processor 34 may thus be configured to perform various functions by executing software. Hardware-based implementations of these functional blocks, and others described herein, are also contemplated.

The memory 36 includes one or more memory devices for storing information. The information stored in the memory 36 may include any or all of software for execution by the processor 34 as noted above, operational status information for the component 30 and/or other components in a redundancy group, and information such as operational status information and/or activity information for components managed by the component 30, for instance.

Examples of memory devices which may be used to implement the memory 36 in some embodiments include solid state memory devices, disk drives, and other types of memory device for use with fixed, movable, or possibly removable storage media.

The communication system component 30 is preferably configurable as either an active component or a standby component of a redundancy group. Configuration of the component 30 may be accomplished through control signalling from an NMS which is received by the component 30 through an interface 32, for example. In software-based implementations, different operation of substantially the same component in active and standby modes may be provided by enabling and disabling software segments, modules, or functions for instance.

When configured as an active component, the component 30 communicates information with a standby component of the redundancy group through an interface 32, which may but need not necessarily be the interface which supports communications with an NMS. An operational status of the standby component is determined by the component operational status module 37 based on the information. The component 30 also manages other components, and therefore the component management system 35 interacts with the managed components. Simple Network Messaging Protocol (SNMP) is a protocol which is often used for this purpose, although of course other protocols or techniques may instead be used. In one embodiment, the component management system 35 configures managed components for operation in accordance with information received from an NMS, so as to allow the NMS to indirectly manage components through the component management system 35.

As noted above, an active component may communicate different types of information with a standby component. A status query, for example, may be periodically transmitted to elicit a response from a standby component. According to one embodiment, the component operational status module 37 is configured to transmit queries at predetermined time intervals and to expect a response to each query within a predetermined response time period. These time periods may be specified by an NMS or entered by a user, for instance.

When a response is received from a standby component through an interface 32, the operational status module 37 of the component 30 determines the operational status of the standby component based on the response. The response might explicitly indicate the operational status of the standby component. In another embodiment, operational status may be inferred by the operational status module 37 based on the receipt or absence of a response as opposed to the content of the response. The receipt of a response to a status query within the response time period could be interpreted by the component operational status module 37 as an indication that a standby component is operational. The operational status module 37 might otherwise determine that the standby component is not operational when the response time period has elapsed.

In some implementations, it may be possible for the component operational status module 37 to determine operational status of a standby component based on information which is exchanged by active and standby components for other purposes. Redundant managing components which manage other components, for example, may exchange state information indicating the states of managed components.

A managing component such as the component 30 includes a component management system 35 for managing other components. A standby component in a redundancy group with the component 30 would also be capable of managing the same components in the event of a failure of the component 30. The current states of managed components may be stored in a state database in the memory 36, for example, which is maintained by the component management system 35. In the event of an activity switch initiated by an NMS when the NMS detects a loss of communication with an active managing component for instance, a standby managing component is made active. The new active managing component must somehow assess the state of the components which it is now responsible for managing.

In order to provide for fast activity switching, managed component states may be kept up to date in both active and standby managing components. An active state database maintained by an active component may be replicated to a standby component by communicating managed component state changes from the active component to the standby component. The standby component then has an accurate indication of current managed component states whenever an activity switch occurs.

Normal database replication procedures may effectively be exploited in accordance with an embodiment of the invention for operational state determination. Where a standby component acknowledges receipt of state information from an active component, the acknowledgement may be used as a basis to infer the operational state of the standby component. Receipt of an acknowledgement within an acknowledgement time period may be interpreted as an indication that the standby component is operational, with lack of acknowledgement within the acknowledgement time period, or a negative acknowledgement or other indication of a replication failure, indicating that the standby component is not operational. In the event of a replication failure, the standby component, whether or not it is actually still able to perform its normal functions, does not have a correct copy of the current state database for managed components and therefore could be deemed not operational.

A database replication acknowledgement and a query response, described above, may thus be considered responses to information which is communicated to a standby component from an active component. In some embodiments, a standby component may send an indication of its operational status to an active component without first being prompted by the active component or receiving information from the active component. The component operational status module 37 may therefore monitor a communication link for information, such as a response or an operational status indication, from a standby component, and determine an operational status of the standby component based on a result of the monitoring. The status determination may involve determining whether information is received from the standby component when expected, as in the case of a database replication acknowledgement, and/or processing information which is received from a standby component.

Other elements or systems may also be involved in information transfer between redundant components. An element of the component management system 35 which is responsible for maintaining synchronization between state databases, for example, might notify the component operational status module 37 if any synchronization problems are encountered. In this case, acknowledgements of state information which is transferred to a standby component may be processed by the synchronization or replication element of the component management system 35 and any replication failures detected on the basis of acknowledgements, negative acknowledgements, or missing acknowledgements are reported to the operational status module 37.

For example, when a component becomes active, the component management system 35 may back up its state database and copy the state database to a standby component. The standby then restores this state database. Once the standby component completes this operation, the active and standby state databases are in synchronization. The component management system 35, illustratively a software-based synchronization engine of the system 35, then takes care of sending changes in the active state database to the standby state database and processing responses from the standby component. If there is a problem in keeping the standby state database in synchronization with the active state database, the engine notifies the component operational status module 37, which may then determine the cause of the problem from the notification. The problem, possibly the cause, and/or an operational status determined on the basis of the problem and/or cause may also be reported to an NMS.

A component operational status module 37 of an active component may thus assess the operational status of a standby component based on direct or indirect monitoring for information communicated with the standby component. The component operational status module 37 may send a status query to a standby component and monitor for a response from the standby component. For a determination of operational state based on database replication, the component operational status module 37 effectively indirectly monitors for responses received from the standby component. This monitoring is indirect in the sense that the component management system 35 manages state information transfers and monitors for responses from the standby component and then reports failures, detected on the basis of this monitoring, to the component operational status module 37.

In some embodiments, the active component of a redundancy group provides a remote system such as an NMS with operational status information. The component 30, for example, may transmit operational status information for the or each standby component in a redundancy group, and possibly an indication of its own operational status, to an NMS through an interface 32. The component operational status module 37 may transmit operational status information to the NMS each time a component operational status determination is made, at certain times or time intervals, and/or in response to queries from the NMS for instance. In another embodiment, the component operational status module 37 transmits operational status information only when there is a change in the operational status of a standby component, thereby avoiding transmission of unnecessary operational status information.

An overall operational status of the redundancy group may be determined based on the operational status of a standby component, or on the operational status of multiple components in a redundancy group, including the active component and at least one standby component. This determination of group operational status may be made by the active component or by the remote system to which operational status information is provided. In the former case, group operational status information is provided to the remote system. According to one embodiment, an active component and a remote system are configured to determine respective different types of operational status.

In one embodiment, overall group operational status may be online, off-line, reconcile in progress, or unprotected. Other embodiments may provide further, fewer, or different operational status options.

An online operational status indicates that an active component has a communication link with its management system, either an NMS or a component management system, that all of its operations are functional, and that its standby component, or at least one standby component when more than one standby component is provided, is operational. As this example illustrates, determination of the operational status of a redundancy group may take into account the operational status both active and standby components. Where a remote system determines overall group operational status, active component operational status information may be reported to the remote system along with standby component operational status(es) or inferred by the remote system from the receipt of status information or a failure to receive status information when expected.

The off-line group operational status indicates that there is no connectivity between a component and its management system. In this condition, an NMS may be unable to communicate with a redundancy group, and lower-level management operations for indirectly managed components cannot be performed.

The reconcile in progress status indicates that a reconciliation process is currently being performed. An NMS, for example, might request that an active managing component through which it indirectly manages other components confirm and report the current status of those other components. A reconcile in progress status indicates that the confirmation and reporting operations have not yet been completed.

An unprotected status indicates that an active component is not protected by a standby component.

As noted above, an active component and a remote system to which operational status information is provided may determine different types of operational status. In one implementation, the active component determines only the online or unprotected status and sends it to the NMS. The NMS then determines the status to be displayed or otherwise output. For example, if a reconcile is in progress at an active component and at the same time, a standby component goes out of network, in which case communications between the active component and the standby component are interrupted, the group operational status may be indicated as reconcile in progress. Once the reconcile is complete, if the standby component is still out of network, the group operational status is changed to unprotected. This decision may be made by the NMS, since the NMS would be aware of the reconcile operation which is currently being performed by an active component. The NMS also determines the off-line status for a redundancy group, if it is unable to communicate with components of the redundancy group.

Indications of redundancy group operational status are preferably provided at least at an NMS, in a map of a communication system, for example. According to one embodiment, an icon representing the redundancy group and an operational status of the redundancy group is displayed in the system map. An icon might also or instead be displayed in list, tree, or other types of representation.

The same icon may be used to represent the redundancy group and also its status. For example, text and/or image portions of the icon may represent the redundancy group, with a colour of the icon representing the overall operational status of the group. An illustrative example of a redundancy group icon is described in further detail below with reference to Fig. 5.

The foregoing describes in detail the operation of the component 30 as an active component. As noted above, the component 30 may instead be configured as an active component or a standby component of a redundancy group. When configured as a standby component, the component operational status module 37 transmits an indication of the operational status of the component 30 to an active component of the redundancy group, or other information for use by the active component to determine the operational status of the standby component.

Fig. 4 is a block diagram of an NMS implementing an embodiment of the invention. The illustrative example NMS 40 includes an output device 42, one or more interfaces 44, a memory 48, and a processor 46 operatively coupled to the output device 42, to the interface(s) 44, and to the memory 36. In the NMS 40, an activity control module 45 and a group operational status module 47 are implemented using the processor 46.

An NMS may include further or possibly fewer elements than those explicitly shown in Fig. 4, such as elements for implementing conventional NMS functions in addition to redundancy group-related functions disclosed herein. Similarly, the elements shown in Fig. 4, such as the activity control module 45, may perform redundancy group functions as well as conventional control and management functions. It should also be appreciated that embodiments of the invention may be implemented in other types of system than an NMS.

The output device 42 provides information to a user, and may include a display, for example. Cathode ray tubes and liquid crystal displays are common types of display, although other display types, as well as other types of output device, may be used to output information to a user. Printouts and electronic files are further examples of forms of output which may be provided by the output device 42.

The interface(s) 44, like the interface(s) 32 of Fig. 3, may include one or more interfaces through which information may be transmitted and/or received. The particular structure of the interface(s) 44 may be dependent upon the information transfer mechanisms to be supported and the type of communication medium over which information is to be transferred. The interface(s) 44 at the NMS 40 preferably include at least an interface which is compatible with an interface provided at each component which it directly manages, or an interface which supports translation or analogous functions where an interface provided at a managed component is not directly compatible with an interface 44.

Implementation of the activity control module 45 and the group operational status module 47 using the processor 46, such as a microprocessor, microcontroller, ASIC, DSP, PLD, or FPGA as shown in Fig. 4, or more strictly as software for execution by the processor 46, is intended for illustrative purposes. Hardware-based implementations are also possible.

The memory 48 includes one or more memory devices for storing information which may include any or all of software for execution by the processor 46 as noted above, group operational status information, and information such as operational status information and/or activity information for components directly or indirectly managed by the NMS 40, for instance. Examples of memory devices which may be used to implement the memory 48 have been noted above with reference to the memory 36 of Fig. 3.

In operation, the operational status module 47 determines an operational status of a redundancy group, and provides through the output device 42 an indication of the redundancy group and the operational status of the redundancy group. The indication may be provided in the form of an icon in a communication system map or other visual representation, with the icon including an indication that it represents a redundancy group, and one or more further indications of the operational status of the redundancy group. As described above, online, off-line, reconcile in progress, and unprotected operational statuses are supported in one embodiment.

Determination of standby component operational status by an active component of a redundancy group has also been described above. The active component may provide the NMS 40 with information indicating the operational status of the redundancy group as a whole, or information indicating component operational statuses of one or more components. This information is received by the NMS 40 through an interface 44.

In the former case, the active component may itself include a group operational status module for processing one or more component operational statuses to determine an overall group operational status. A group operational status module inputs component operational status(es), and may be directly or indirectly operatively coupled to a component operational status module 37 (Fig. 3). With reference to Fig. 3, an example of an indirect operative coupling between the component operational status module 37 and a group operational status module would be an arrangement in which the component operational status module 37 stores component operational status information in the memory 36, and the group operational status information is operatively coupled to the memory 36 to retrieve the component operational status information.

When an active component has already determined group operational status and provides the group operational status to the NMS 40, the group operational status module 47 determines the operational status of the redundancy group by receiving the group operational status information from the active component. Otherwise, the group operational status module 47 determines the operational status of the redundancy group based on the operational status of the one or more components of the redundancy group.

Thus, either a communication system component of a redundancy group or a management system which manages the component may determine group operational status based on one or more component operational statuses.

The activity control module 45 controls which communication system component of a redundancy group is active. Indications of current activity states may be displayed on the display 42 and/or stored in the memory 48.

Other functions may also be initiated by the activity control module 45 on an activity switch. For example, when a standby component is determined to be not operational, cause information may be provided by the active component and received by the NMS 40 along with status information. A determination that a standby component is not operational might be caused by a failure to reply to a status query or a database replication failure, for instance. Cause information may be used by the activity control module 45 in determining whether any particular operations are to be initiated when activity is switched to a standby component which status information previously indicated was not operational.

In the event of a database replication failure for instance, an active component may report the failure to the NMS 40 as a cause of the standby component being deemed non- operational. The NMS 40 is then aware that the standby component does not have an accurate copy of a current state database maintained by the active component, and may initiate one or more recovery operations, such as a reconciliation process, by the standby component.

Recovery operations may be initiated responsive to receipt of cause information or delayed until activity is subsequently to be switched to a standby component which was previously indicated to be non-operational. For example, an NMS may attempt to contact a standby component which was indicated to be non-operational due to a communication failure, but initiate a resource-intensive reconciliation process by a standby component only when activity is to be switched to that standby component.

As described above, an indication of operational status of a redundancy group may be provided in the form of an icon in a communication system map. Fig. 5 is a block diagram of an icon according to an embodiment of the invention. The icon 50 includes an indication 52 of group operational status and an indication 54 that the icon represents a redundancy group. The particular indications shown in Fig. 5 are intended solely for illustrative purposes. Different indications may be used in other embodiments.

The "check mark" status indication 52 indicates that the active component of the redundancy group is currently operating in a protected state. This may be replaced with another indicator such as an exclamation point "!" if no redundant standby component of the redundancy group is operational.

The "R" symbol 54 is used in the icon 50 to indicate that the component is configured in "Redundant" mode. An icon for a communication system component which is configured in non-redundant or "Simplex" mode would not include the symbol 54.

Other indications may also be provided in a system map icon. A component identifier 56 may be provided in an icon to indicate the type of a component, an address of the component, and/or other information identifying a component.

Icon color, and possibly other attributes, may be used as a further operational status indication. In one embodiment, online status is indicated by a "Green" colored icon, off-line status is represented by a "Red" colored icon, and reconcile in progress and unprotected statuses are represented by a "Yellow" colored icon.

An icon may also provide an indication of a reason associated with a current group operational status. For an unprotected status for instance, the icon may include an indication of why the redundancy group is not functioning, e.g., due to a database replication failure. A reason indication is provided in one embodiment by icon color. In one illustrative embodiment, an "Orange" unprotected icon indicates that the unprotected status is due to a problem with the standby component, and a yellow unprotected icon indicates that the unprotected status is due to a state database replication failure.

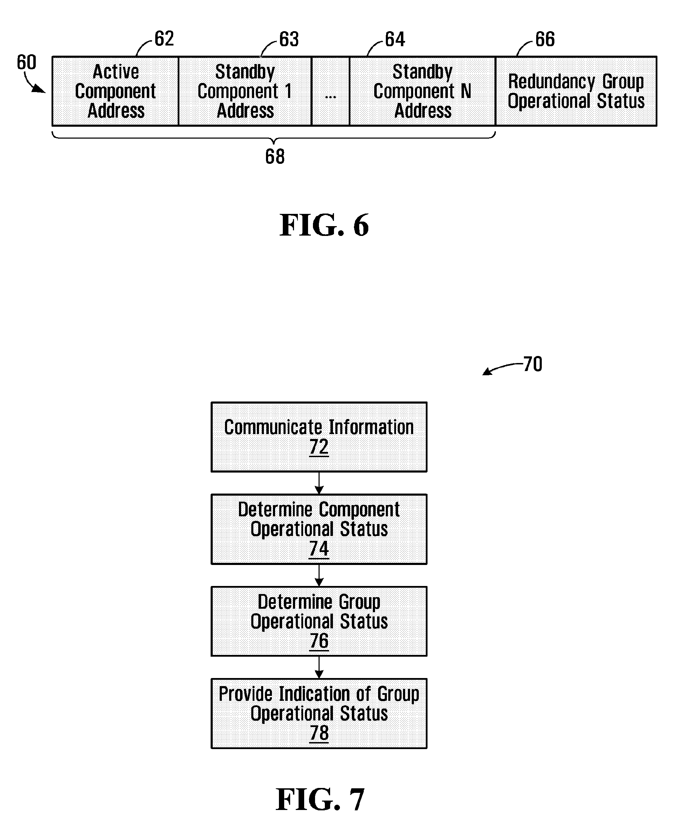

Fig. 6 is a block diagram of a data structure in accordance with an embodiment of the invention. The data structure 60 includes an address 62 of an active component of a redundancy group, addresses 63, 64 of N standby components of the redundancy group, and a status indicator 66 indicating an operational status of the redundancy group, and may be stored in memory at a component of a redundancy group and/or in memory at a management system which manages the components of the redundancy group. In the data structure 60, component activity is inherent in the ordering or arrangement of component addresses. According to other embodiments, component activity may be indicated separately. A redundancy group data structure may also include other information (not shown) associated with a redundancy group or its components.

The addresses 62, 63, 64, illustratively Internet Protocol (IP) addresses of the components, represent an example of information which may be used as an identifier of a redundancy group. In other embodiments, different information than component addresses may be used to identify a redundancy group and/or type of redundant components.

Fig. 7 is a flow diagram of a method of an embodiment of the invention. The method 70 includes operations which may be performed by management systems or managed components, as will be apparent from the foregoing.

The method 70 begins at 72 with an operation of communicating information within a redundancy group. The operational status of at least each standby component of the redundancy group is determined at 74 based on the information, and an operational status of the redundancy group is then determined at 76 based on the component operational status of at least each standby component of the redundancy group. At 78, an indication of the operational status of the redundancy group is provided.

Various ways of performing the operations of the method 70, as well as variations of the method to include further, fewer, and different operations than those explicitly shown, will be apparent from the foregoing descriptions of apparatus, icons, and data structures of embodiments of the invention.

Techniques for determining and displaying the overall operational status of a group of redundant managed components, and not simply the status of the individual systems of the pair, have been described above. An NMS, for example, may determine the status of a standby component of a redundancy group from the active component of the group, and then determine an overall operational status of the group from individual component operational statuses.

An indication of overall redundancy group operational status provides communication system operators with an accurate view of system status and particularly the protection status of components which are intended to be protected by redundant components.

Improving an NMS GUI, which may include a communication system map as noted above, to provide more information to operators in a clear and easily understood manner is a continual challenge. These types of improvements are especially important as NMSs manage ever-larger networks. Embodiments of the invention address this problem with redundancy group status operations and a unique design of icons representing redundancy groups, illustratively groups of component management systems.

What has been described is merely illustrative of the application of principles of embodiments of the invention. Other arrangements and methods can be implemented by those skilled in the art without departing from the scope of the present invention.

For example, implementation of embodiments of the invention does not preclude implementation of components which are not part of a redundancy group. A communication system may include a plurality of components, some of which form one or more redundancy groups. In each redundancy group, components are preferably operatively coupled to each other so that information may be communicated within the redundancy group and used to determine operational status of at least a standby component. However, it is also possible that not all redundancy groups of a communication system support embodiments of the invention.

In addition, although described primarily in the context of methods and systems, other implementations of the invention are also contemplated, as instructions stored on a machine-readable medium for example.

## Claims

1. A communication system component configurable as an active component of a redundancy group of communication system components, the component comprising:
one or more interfaces for communicating information with a standby component of the redundancy group and with a remote system; and
a component operational status module operatively coupled to the interfaces and configured to monitor for information from the standby component of the redundancy group, to determine an operational status of the standby component based on a result of the monitoring, and to transmit to the remote system operational status information indicating the operational status of the standby component.

2. The communication system component of claim 1, wherein the component operational status module is configured to transmit to the standby component through an interface of the one or more interfaces information for causing the standby component to transmit response information to the communication system component, and to determine an operational status of the standby component based on the response information.

3. The communication system component of claim 2, wherein the component operational status module is configured to determine an operational status of the standby component based on the response information by determining whether a response to the transmitted information is received within a response time period.

4. The communication system component of any one of claims 1 to 3, wherein the communication system component is further configurable as a standby component of the redundancy group, the component operational status module being configured in a standby mode to receive information from an active component of the redundancy group and to transmit to the active component a response to the received information.

5. The communication system component of claim 1, wherein the communication system component further comprises:
a component management system for managing other components of a communication system.

6. The communication system component of claim 5, wherein the component management system is further configured to transmit to the standby component operational status information for the other components, the operational status information causing the standby component to transmit response information to the communication system component, and wherein the component operational status module is configured to determine an operational status of the standby component based on the response information.

7. The communication system component of any one of claims 1 to 6, further comprising:
a group operational status module operatively coupled to the component operational status module and configured to determine an operational status of the redundancy group based on the operational status of the standby component, the operational status of the redundancy group comprising a status selected from: online status and unprotected status,
wherein the operational status information to be transmitted to the remote system indicates the operational status of the redundancy group.

8. A communication system comprising:
a plurality of components, the plurality of components comprising one or more redundancy groups each comprising a plurality of communication system components of any one of claims 1 to 7, each communication system component of a redundancy group of the one or more redundancy groups being operatively coupled to other components of the redundancy group.

9. The communication system of claim 8, further comprising:
a Network Management System (NMS) operatively coupled to the plurality of communication system components for managing the plurality of components,
wherein the component operational status module of an active communication system component of a redundancy group of the one or more redundancy groups is configured to transmit the operational status information to the NMS.

10. The communication system of claim 9, wherein the NMS comprises:
an interface to a communication link with the active communication system component;
a display; and
a group operational status module operatively coupled to the interface of the NMS and to the display and configured to receive from the active component the operational status information, to determine an operational status of the redundancy group based on the received operational status information, and to display on the display an icon representing the redundancy group and an operational status of the redundancy group.

11. A communication system component configurable as a standby component of a redundancy group of communication system components, the component comprising:
a component management system for managing other communication system components;
an interface to a communication link; and
a component operational status module operatively coupled to the interface and configured to transmit to an active component of the redundancy group through the interface operational status information indicating an operational status of the standby component.

12. An apparatus for indicating operational status of a redundancy group comprising a plurality of communication system components, the apparatus comprising:
an output device; and
an operational status module operatively coupled to the output device and configured to determine an operational status of the redundancy group, and to provide through the output device an indication of the redundancy group and the operational status of the redundancy group.

13. The apparatus of claim 12, wherein the output device comprises a display, and wherein the indication comprises an icon, the icon comprising an indication that the icon represents a redundancy group, and one or more further indications of the operational status of the redundancy group.

14. The apparatus of claim 12 or claim 13, further comprising:
an interface for receiving from an active component of the redundancy group operational status information indicating at least one of an operational status of the redundancy group and a respective operational status of one or more of the plurality of communication system components of the redundancy group,
wherein the operational status module is operatively coupled to the interface and configured to determine the operational status of the redundancy group based on the operational status information received from the active component.

15. The apparatus of any one of claims 12 to 14, wherein the operational status of the redundancy group comprises an operational status selected from: online status, off-line status, reconcile in progress status, and unprotected status.

16. The apparatus of any one of claims 12 to 15, wherein the group operational status module is configured to determine, and to provide through the output device an indication of, a cause associated with the operational status of the redundancy group.

17. The apparatus of claim 12 or claim 13, further comprising:
an interface for receiving from an active component of the redundancy group operational status information indicating an operational status of the redundancy group or of one or more of the plurality of communication system components, the operational status information further comprising cause information where the operational status information indicates that any of the plurality of communication system components is not operational; and
an activity control module for controlling which communication system component of the plurality of communication system components of the redundancy group is active, the activity control module being configured to initiate, based on the cause information, one or more recovery operations by an active communication system component which the operational status information previously indicated was not operational.

18. A communication system comprising:
a Network Management System (NMS) comprising the apparatus of any one of claims 12 to 17; and
a plurality of components operatively coupled to the NMS and comprising the redundancy group.

19. A method of managing communication system component redundancy group operational status, the method comprising:
communicating information within a redundancy group, the redundancy group comprising an active communication system component and one or more standby communication components;
determining a component operational status of at least each standby communication system component of the redundancy group based on the information;
determining an operational status of the redundancy group based on the component operational status of at least each standby communication system component of the redundancy group; and
providing an indication of the operational status of the redundancy group.

20. The method of claim 19, wherein providing comprises displaying on a display an icon representing the redundancy group, the icon further comprising the indication of the operational status of the redundancy group.

21. A machine-readable medium storing instructions which when executed perform the method of claim 19 or claim 20.

22. A machine-readable medium storing a data structure comprising:
an identifier of a redundancy group, the redundancy group comprising a plurality of communication system components; and
a status indicator indicating an operational status of the redundancy group.

23. The medium of claim 22, wherein the identifier comprises an address of a currently active component of the plurality of communication system components and respective addresses of one or more standby components of the plurality of communication system components.

24. The medium of claim 22 or claim 23, wherein the operational status comprises an operational status selected from the group consisting of: online status, off-line status, reconcile in progress status, and unprotected status.

25. The medium of any one of claims 22 to 24, wherein the data structure further comprises:
a cause indicator indicating a cause associated with the operational status of the redundancy group.
